(19) Europäisches Patentamt
European Patent Office
Office européen des brevets

(11) Publication number: **0 070 008 A2**

(12) **EUROPEAN PATENT APPLICATION**

(21) Application number: 82106166.0

(22) Date of filing: 09.07.82

(51) Int. Cl.[3]: C 09 D 5/10
C 09 D 3/54

(30) Priority: 10.07.81 US 282253

(43) Date of publication of application: 19.01.83 Bulletin 83/3

(84) Designated Contracting States: BE DE FR GB IT NL SE

(71) Applicant: UNION CARBIDE CORPORATION
Old Ridgebury Road
Danbury Connecticut 06817(US)

(72) Inventor: Salensky, George Anthony
RD No. 3 Whitehouse Station
New Jersey 08889(US)

(74) Representative: Wuesthoff, Franz, Dr.-Ing. et al,
Patentanwälte Wuesthoff -v. Pechmann-Behrens-Goetz
Schweigerstrasse 2
D-8000 München 90(DE)

(54) **Aluminum thrihydrate modified zinc-rich coatings.**

(57) Modifying zinc-rich coatings with film-forming binders and aluminum trihydrate improves corrosion resistance on steel as well as welding properties.

EP 0 070 008 A2



COMPLETE DOCUMENT

BACKGROUND OF THE INVENTION

This invention pertains to zinc-rich coatings and more particularly to those containing a variety of film-forming binders and aluminum trihydrate.

Zinc-rich coatings, such as, zinc-rich thermoplastic polyhydroxyethers have been used for corrosion protection particularly in the automobile industry. Such coatings are also electrically conductive and so may be used where welding is used for assembling parts. Electrical spot welding is the preferred method of assembling automotive components.

Zinc-rich coatings would be more widely used if certain deficiencies were corrected. These include corrosion resistance particularly on unpassivated steel, welding spark/fume hazards, and poor weld strength. Zinc coatings also tend to coat the electrodes of spot welders so that the number of repetitive welds produced on steel is reduced.

Spot welding and arc welding of steel requires temperatures in excess of 1300°C in order to obtain a melt that will flow together to form a bond. The spark temperature developed during arc welding is often 2000°C or higher, while somewhat lower temperatures are sufficient during spot welding since the electrode pressure aids the flow of the soft steel. In both cases, however, zinc has a tendency to volatilize in the weld area because zinc has a boiling point of 910°C. This is encouraged by the non-oxidizing environment, which is produced by the weld flux

and the physical protection mechanism of the spot welding electrodes. Welding, therefore, results in an expulsion of zinc vapor which then readily oxidizes to zinc oxide upon leaving the weld area.

Aluminum trihydrate has been used in the past to improve the arc and arc track resistance of epoxy compositions intended for electrical applications. Normally, the arc or spark generated during an overvoltage causes carbonization on the surface of the epoxy resulting in a conductive path and producing a short circuit. The presence of aluminum trihydrate in the formulation eliminates the formation of the conductive carbon track. The mechanism postulated is that the water released by the aluminum hydrate at the arc temperature oxidizes the carbon to gaseous components. The actual mechanism has not been defined although it has been discussed in U.S. 2,997,526 and U.S. 2,997,527. The description of the test method for evaluating inclined plane tracking under arc conditions can be found in ASTM D 2303-68.

It is an object of this invention to impart such properties as reduced spark spatter, improved weld strength, and reduced electrode fouling in zinc-rich thermoplastic polyhydroxyether coatings.

It is another object of this invention to impart the properties of the preceding paragraph to zinc-rich coatings containing film-forming binders other than thermoplastic polyhydroxyethers.

Other objects will become apparent to those skilled in the art upon a further reading of the specification.

SUMMARY OF THE INVENTION

A satisfactory metal-coating composition meeting the above-described electrical criteria has been provided by a composition comprising:

(A) a film-forming binder;

(B) about 350 to about 1450 parts by weight, per hundred parts of film-forming binder, of zinc pigment;

(C) about 3 to about 100 parts by weight, per hundred parts of film-forming binder, of aluminum trihydrate;

(D) 0 to about 35 parts by weight, per hundred parts of film-forming binder, of a heat hardened resole phenol-aldehyde condensation resin; and

(E) 0 to about 20 parts by weight, per hundred parts of film-forming binder, of a suspending agent.

The term "film-forming binder" as used in this invention means any organic material which will form a zinc-rich coating on metallic substrates to improve corrosion resistance, particularly on unpassivated steel, as well as welding properties.

Preferred film-forming binders for use in this

invention include: thermoplastic polyhydroxyethers, low, intermediate and high molecular weight epoxy resins, epoxy ester resins, alkyl silicates, phenolic resins cured with intermediate molecular weight epoxy resins, isocyanate cured thermoplastic polyhydroxyethers, chlorinated rubbers, vinyl chloride resins, poly(bisphenol A formal) and the like.

Chlorinated rubber is described in the Encyclopedia of Polymer Science and Technology, Vol. 12, pages 310-312, Interscience Publishers, NYC 1970. Those designated by the trade name Parlon are described in "Polymers and Resins" by B. Golding, D. Van Nostrand Co., Inc., Princeton, NJ, pages 236-239 (1959).

Figure 1-A and B is a Scanning Electron Micrograph at 100X magnification of zinc-rich thermoplastic polyhydroxyetheer coatings without and with aluminum trihydrate exposed to salt spray for 100 hours.

Figure 2-A and B is a Scanning Electron Micrograph at 1000X magnification of zinc-rich thermoplastic polyhydroxyether coatings without aluminum trihydrate and containing aluminum trihydrate exposed to salt spray for 100 hours.

Figure 3 is a Scanning Electron Micrograph at 600X magnification of a spot welding electrode face which has been exposed to the welding of a zinc-rich thermoplastic polyhydroxyether coating.

The term "thermoplastic polyhydroxyether" herein refers to substantially linear polymers having the general formula:

$$\left[ D-O-E-O \right]_n$$

wherein D is the radical residuum of a dihydric phenol,

E is an hydroxyl containing radical residuum of an epoxide and n represents the degree of polymerization and is at least 30 and is preferably 80 or more. The term "thermoplastic polyhydroxyether" is intended to include mixtures of at least two thermoplastic polyhydroxyethers.

The thermoplastic poly(hydroxyethers) can be prepared by admixing from about 0.985 to about 1.015 moles of an epihalohydrin with one mole of a dihydric phenol together with from about 0.6 to 1.5 moles of an alkali metal hydroxide, such as, sodium hydroxide or potassium hydroxide generally in an aqueous medium at a temperature of about 10° to about 50°C until at least about 60 mole percent of the epihalohydrin has been consumed. The thermoplastic poly(hydroxyethers) thus produced have reduced viscosities of at least 0.43. Reduced viscosity values were computed by use of the equation:

$$\text{Reduced Viscosity} = \frac{t_s - t_o}{c t_o}$$

wherein $t_o$ is the efflux time of the solvent (tetrahydrofuran, $t_s$ is the efflux time of the poly(hydroxyether) solution, c is the concentration of the poly(hydroxyether) solution in terms of grams of poly(hydroxyether) per 100 ml. of tetrahydrofuran.

The dihydric phenol contributing the phenol

radical residuum, D, can be either a dihydric mononuclear phenol such as those having the general formula:

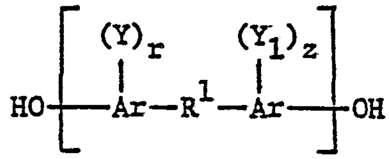

wherein Ar is an aromatic divalent hydrocarbon such as naphthylene and, preferably, phenylene, Y and $Y_1$ which can be the same or different are alkyl radicals, preferably having from 1 to 4 carbon atoms, halogen atoms, i.e., fluorine, chlorine, bromine and iodine, or alkoxy radicals, preferably having from 1 to 4 carbon atoms, r and z are integers having a value from 0 to a maximum value corresponding to the number of hydrogen atoms on the aromatic radical (Ar) which can be replaced by substituents and $R^1$ is a bond between adjacent carbon atoms as in dihydroxydiphenyl or is a divalent radical including, for example 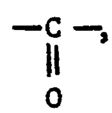, —O—, —S—, —SO—, $—SO_2—$ and —S—S—, and divalent hydrocarbon radicals such as alkylene, alkylidene, cycloaliphatic, e.g., cycloalkylidene, halogenated alkoxy or aryloxy substituted alkylene, alkylidene and cycloaliphatic radicals as well as alkarylene and aromatic radicals including halogenated, alkyl, alkoxy or aryloxy substituted aromatic radicals and a ring fused to an Ar group; or $R^1$ can be polyalkoxy, or polysiloxy, or two or more alkylidene radicals separated by an aromatic ring, a tertiary amino group, an ether linkage, a carbonyl group or a sulfur containing group such as sulfoxide,

and the like.

Examples of specific dihydric polynuclear phenols include among others:

The bis(hydroxyphenyl) alkanes such as 2,2-bis-(4-hydroxyphenol)propane, 2,4'-dihydroxydiphenylmethane, bis(2-hydroxyphenyl)methane, bis(4-hydroxyphenyl)methane, bis(4-hydroxy-2,6-dimethyl-3-methoxyphenyl)methane, 1,1-bis(4-hydroxyphenyl ethane, 1,2-bis(4-hydroxyphenyl)-ethane, 1,1-bis(4-hydroxy-2-chlorophenyl)ethane, 1,1-bis-(3-methyl-4-hydroxyphenyl)ethane, 1,3-bis(3-methyl-4-hydroxyphenyl)propane, 2,2-bis(3-phenyl-4-hydroxyphenyl)-propane, 2,2-bis(3-isopropyl-4-hydroxyphenyl)propane, 2,2-bis(2-isopropyl-4-hydroxyphenyl)propane, 2,2-bis-(4-hydroxylnaphthyl)propane, 2,2-bis(4-hydroxyphenyl)-pentane, 3,3-bis(4-hydroxyphenyl)pentane, 2,2-bis(4-hydroxyphenyl)heptane, bis(4-hydroxyphenyl)phenylmethane, bis(4-hydroxyphenyl)cyclohexylmethane, 1,2-bis(4-hydroxy-phenyl-1,2-bis(phenyl)propane, 2,2-bis(4-hydroxyphenyl)-1-phenyl-propane and the like;

Di(hydroxyphenyl)sulfones such as bis(4-hydroxyphenyl)sulfone, 2,4'-dihydroxydiphenyl sulfone, 5'-chloro-2,4'-dihydroxydiphenyl sulfone, 5'-chloro-4,4'-dihydroxydiphenyl sulfone and the like;

Di(hydroxyphenyl)ethers such as bis(4-hydroxyphenyl)ether, the 4,3'-, 4,2'-, 2,2'-, 2,3'-, dihydroxydiphenyl ethers, 4,4'-dihydroxy-2,6-dimethyldiphenyl ether, bis(4-hydroxy-3-isobutylphenyl)ether, bis(4-hydroxy-3-isopropylphenyl)ether, bis(4-hydroxy-3-chlorophenyl)-ether, bis(4-hydroxy-3-fluorophenyl)ether, bis(4-hydroxy-3-bromophenyl)ether, bis(4-hydroxynaphthyl)ether, bis(4-hydroxy-3-chloronaphthylether, bis(2-hydroxydiphenyl)-ether, 4,4'-dihydroxy-2,6-dimethoxydiphenyl ether, 4,4'-dihydroxy-2,5-diethoxydiphenyl ether, and the like.

Also suitable are the bisphenol reaction products of 4-vinylcyclohexene and phenols, e.g., 1,3-bis(p-hydroxyphenyl)-1-ethylcyclohexane and the bisphenol reaction products of dipentene or its isomers and phenols such as 1,2-bis(p-hydroxyphenyl)-1-methyl-4-isopropylcyclohexane as well as bisphenols such as 1,3,3-trimethyl-1-(4-hydroxyphenyl)-6-hydroxyindane, and 2,4-bis(4-hydroxyphenyl)-4-methylpentane, and the like.

Particularly desirable dihydric polynuclear phenols have the formula

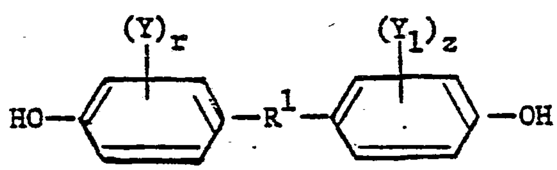

wherein Y and $Y_1$ are as previously defined, r and z have values from 0 to 4 inclusive and $R^1$ is a divalent saturated aliphatic hydrocarbon radical, particularly alkylene and alkylidene radicals having from 1 to 3 carbon atoms, and cycloalkylene radicals having up to and including 10 carbon atoms.

Mixtures of dihydric phenols can also be employed and whenever the term "dihydric phenol" or "dihydric polynuclear phenol" is used herein, mixtures of these compounds are intended to be included.

The epoxide contributing the hydroxyl containing radical residuum, E, can be monoepoxide or diepoxide. By "epoxide" is meant a compound containing an oxirane

group, i.e., oxygen bonded to two vicinal aliphatic carbon atoms, thus,

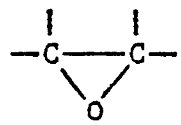

A monoepoxide contains one such oxirane group and provides a radical residuum E containing a single hydroxyl group, a diepoxide contains two such oxirane groups and provides a radical residuum E containing two hydroxyl groups. Saturated epoxides, by which term is meant diepoxides free of ethylenic unsaturation, i.e., $>C=C<$ and acetylenic unsaturation, i.e, $-C\equiv C-$, are preferred. Particularly preferred are halogen substituted saturated monoepoxides, i.e., the epihalohydrins and saturated diepoxides which contain solely carbon, hydrogen and oxygen, especially those wherein the vicinal or adjacent carbon atoms form a part of an aliphatic hydrocarbon chain. Oxygen in such diepoxides can be, in addition to oxirane oxygen, ether oxygen $-O-$, oxacarbonyl oxygen $-\overset{O}{\overset{\|}{C}}-O-$, carbonyl oxygen $-\overset{O}{\overset{\|}{C}}-$, and the like.

Specific examples of monoepoxides include epichlorohydrins such as epichlorohydrin, epibromohydrin, 1,2-epoxy-1-methyl-3-chloropropane, 1,2-epoxy-1-butyl-3-chloropropane, 1,2-epoxy-2-methyl-3-fluoropropane, and the like.

Illustrative diepoxides include diethylene glycol bis(3,4-epoxycyclohexane-carboxylate), bis(3,4-epoxycyclohexyl-methyl)adipate, bis(3,4-epoxycyclohexyl-methyl)phthalate, 6-methyl-3,4-epoxycyclohexylmethyl-6-methyl-3,4-epoxycyclohexane carboxylate, 2-chloro-3,4-epoxycylohexylmethyl-2-chloro-3,4-epoxycyclohexanecarboxylate, diglycidyl ether, bis(2,3-epoxycyclopentyl)-ether, 1,5-pentanediol bis(4-methyl-3,4-epoxycyclohexylmethyl)ether, bis(2,3-epoxy-2-ethylhexyl)adipate, diglycidyl maleate, diglycidyl phthalate, 3-oxatetracyclo$[4.4.0.1^{7,10}.0^{2,4}]$-undec-8-yl 2,3-epoxypropyl ether, bis(2,3-epoxycyclopentyl)sulfone, bis(3,4-epoxyhexoxypropyl)sulfone, 2,2'-sulfonyldiethyl, bis(2,3-epoxycyclopentanecarboxylate), 3-oxatetracyclo-$[4.4.0.1^{7,10}.0^{2,4}]$-undec-8-yl 2,3-epoxybutyrate, 4-pentenal-di-(6-methyl-3,4-epoxycyclohexylmethyl)acetal, ethylene glycol bis(9,10-epoxystearate), diglycidyl carbonate, bis(2,3-epoxybutylpenyl)-2-ethylhexyl phosphate, diepoxydioxane, butadiene dioxide, and 2,3-dimethyl butadiene dioxide. The preferred diepoxides are those wherein each of the oxirane groups is connected to an electron donating substituent which is not immediately connected to the carbon atoms of that oxirane group. Such diepoxides having the grouping

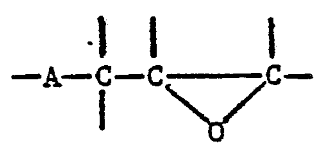

wherein A is an electron donating substituent such as —O—,

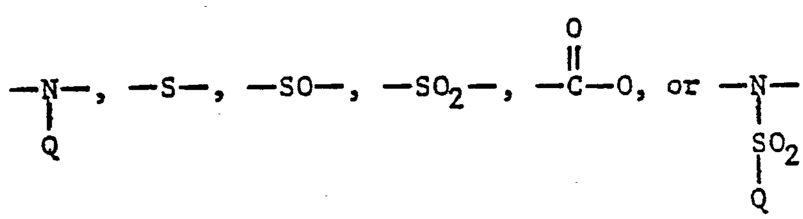

and Q is a saturated hydrocarbon radical such as an alkyl, cycloalkyl, aryl or aralkyl radical.

The zinc pigment used in this invention is commercially available and preferably has a particle size of about 2 to about 15 microns. It is preferred to use zinc pigment having an average particle size of 6-7 microns.

The resole phenol-aldehyde condensation products which can be used in this invention are produced by the condensation of phenols and aldehydes under alkaline conditions. A resole produced by the condensation of a phenol with formaldehyde most likely proceeds through an intermediate having the following illustrated type structure:

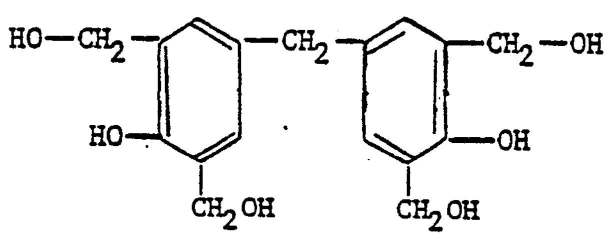

In a typical synthesis, resoles are prepared by heating one mole of phenol with about 1.5 moles of formaldehyde using sodium or barium hydroxide as a catalyst, although any phenolic compound, or a mixture of phenolic compounds having two or three reactive aromatic ring hydrogen positions, can be used with an aldehyde or aldehyde-liberating compound capable of undergoing phenol-aldehyde condensation. Illustrative of phenolic compounds are cresol, xylenol, ethylphenol, butylphenol, isopropylmethoxyphenol, chlorophenol, reco-

rcinol, hydroquinone, naphthol, 2,2-bis(p-hydroxyphenol)-propane, and the like. Illustrative of aldehydes are formaldehyde, acetaldehyde, acrolein, crontonaldehyde, furfural, and the like. Illustrative of aldehyde-liberating compounds are for example, paraformaldehyde, formalin and 1,3,5-trioxane. Ketones such as acetone are also capable of condensing with the phenolic compounds, as are methylene engendering agents such as hexamethylenetetramine, and are contemplated as useful for preparing the resole resins in this invention.

The condensation of phenolic compound and aldehyde, can of course, be conducted in the presence of other alkaline reagents such as sodium carbonate, sodium acetate, potassium hydroxide, ammonium hydroxide and the like, if desired. When the condensation reaction is completed, if desired, the water and other volatile materials can be removed by distillation, and the catalyst neutralized.

The most suitable resole resins are those which are brought to an advanced state of cure, but are still heat-reactive. These resins are insoluble in water, readily soluble in conventional organic solvents such as methyl ethyl ketone, acetone, methanol, ethanol, and the like. Resole resins having a particularly desirable combination of properties are those which have an average molecular weight in the range between about 350 and 600.

Where suspending agents are used their nature is not critical and thus one can employ low molecular weight polyolefins, silane treated pyrogenic silica, quarternary amine treated hydrous magnesium aluminum silicate, and the like.

Suitable solvents are used in applying the coating composition to the particular metallic substrate. The solvents used depend upon the nature of the application method. Thus for example, in spray coating it has been found useful to employ a mixture containing an aliphatic ketone having about 3 to 6 carbons and aromatic hydrocarbons containing about 7 to 9 carbons plus optional aliphatic alcohols containing about 3 to 5 carbons, and the like. For roller-type applications one can use a mixture of Cellosolve acetate and aromatic hydrocarbons containing 7 to 12 carbons, and the like. It is convenient to use glycol esters such as Cellosolve acetate, (the acetate of a monoalkyl glycol ether sold under the Trademark Cellosolve by Union Carbide Corporation).

The preferred polyhydroxyether is available commercially as Bakelite Phenoxy PKHH, a trade designation of Union Carbide Corporation for condensation polymer derived from bisphenol-A (2,2-bis(p-hydroxyphenyl)propane and epichlorohydrin having the structural formula:

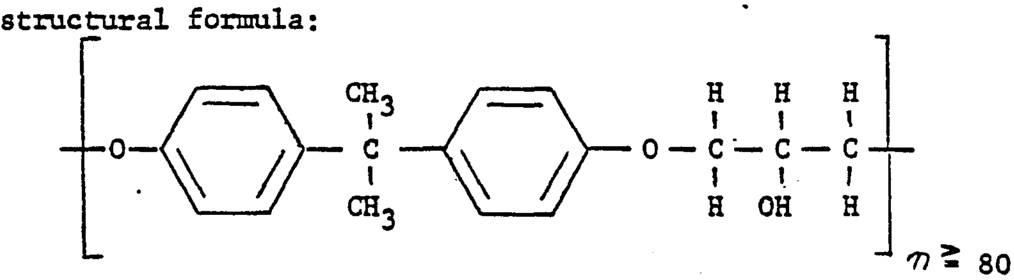

The phenoxy resin is available as a solution in glycol esters such as Cellosolve acetate (the acetate of a monoalkyl glycol ether sold under the Trademark Cellosolve by Union Carbide Corporation) or in pellet form which is readily soluble in a variety of solvents and solvent blends. The solid phenoxy resin sold under the designation PKHH by Union Carbide Corporation is soluble in the following solvents: butyl Carbitol, butyl Carbitol acetate, butyl Cellosolve, Carbitol solvent, Cellosolve acetate, Cellosolve solvent, diacetone alcohol, diethyl Carbitol, dimethylformamide, dimethyl sulfoxide, dioxane, ethoxy triglycol, mesityl oxide, methyl Cellosolve acetate, methyl ethyl ketone, and tetrahydrofuran.

Carbitol is a Trademark of Union Carbide Corporation for the monoalkyl ether of diethylene glycol.

Suitable polyisocyanate reactants useful for hardening phenoxy resins employed in zinc-rich phenoxy coatings are polymeric isocyanates having units of the formula:

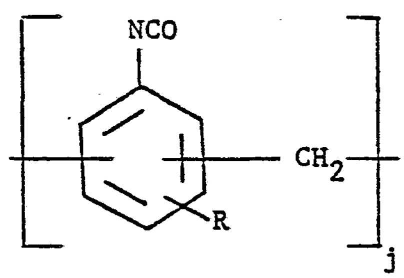

where R is hydrogen and/or lower alkyl having 1 to about 4 carbons and $j$ has an average value of at least 2.1. Preferably the lower alkyl radical is methyl and $j$ has an average value of from 2.1 to about 3.0. Particularly useful polyisocyanates of this type are the polyphenylmethylene polyisocyanates produced by phosgenation of the polyamine obtained by the acid catalyzed condensation of aniline with formaldehyde. Polyphenylmethylene isocyanates of this type are available commercially under such trade names as PAPI, NIAX, Isocyanate AFPI, Mondur MR, Isonate 390P, NCO-120, Thanate P-200, NCO-10 and NCO-20. These products are low viscosity (50-500 mPa·s centipoise at 250°C) liquids having average isocyanato functionalities in the range of about 2.25 to about 3.2 or higher, depending upon the specific aniline to formaldehyde molar ratio used in the polyamine preparation.

High molecular weight epoxy resins are commercially available from Shell Oil Company. Their preparation is described in U.S. 3,177,090 issued to R. E. Bayes et al.

Alkyl silicates are produced by the reaction of silicon tetrachloride and alcohols or alkoxy alcohols, generally in a reactor equipped with a stirrer, condenser and vat scrubber. The hydrogen chloride by-product is removed at atmospheric pressure. Through this process, the most common products TEOS (tetraethyl orthosilicate) and Cellosolve silicate are made. Cellosolve is a Trademark of Union Carbide Corporation for monoalkyl ethers of ethylene glycol.

Poly(bisphenol A formals) can be made by the interaction of bisphenol A with methylene dichloride, $CH_2Cl_2$ in the presence of base and dimethyl sulfoxide (DMSO).

In a typical preparation a charge comprising:

| Component | Molar Amount |
|---|---|
| 45.66 g. Bisphenol A | 0.2 mole |
| 120 cc. DMSO | |
| 15.45 g. of 52.3% aqueous NaOH | 0.202 mole |
| 22.14 g. of 51.2% aqueous KOH | 0.202 mole |
| 30 cc. Toluene | |

was mixed under nitrogen and the water was then removed while heating to reflux by azeotropic distillation. The mixture was cooled to 85-90°C and a solution of 17.0 g (0.2 mole) of methylene chloride in 20 cc. of DMSO was added over a period of 80 minutes. The temperature was raised to 90-95°C for 0.5 hours and to 100°C for 0.25 hours. At this point the viscosity of the mixture became quite high. Methyl chloride was bubbled through the mixture for 30 minutes. The mixture was diluted with 250 cc. of toluene and filtered to remove salt. The filtrate was charged to a Warning Blender containing an excess of isopropyl alcohol to coagulate and recover the bisphenol polyformal as a powder. The reduced viscosity of the polymer thus synthesized was 0.99 when measured in chloroform as a 0.2% solution was 0.5.

Epoxy esters can be made from unsaturated oil acids as disclosed in U.S. 2,502,518 issued to Greenlee et al. and from oil acids low in unsaturation, such as tall oils, as disclosed in U.S. 2,493,486 issued to

Greenlee. Examples of epoxy esters from linseed fatty acid and coconut fatty acid are described in "Epoxy Resins" by H. Lee et al. page 286, McGraw Hill Book Co. Inc., NYC, 1957. Conventional epoxy resins of varying molecular weights and various curing agents therefor including phenolic resins and polyaminoamides are delineated in "Epoxy Resins" by H. Lee et al. at pages 155-157 and 166-172 respectively and the "Handbook of Epoxy Resins" by H. Lee et al., McGraw Hill Book Co. Inc., NYC (1967), pages 2-3 and 2-9 respectively.

Phenolic resins including both resoles and novolaks are described in Polymer Processes, C. E. Schildknecht, pages 295-350, Interscience Publishers Inc., NYC, 1956.

The aluminum trihydrate used in this invention should preferably have a particle size which is about 1/5 to about 1/10 that of the zinc pigment in order to provide optimum packing properties of the zinc particles with the aluminum trihydrate particles. This provides better film integrity of the final coating and at the same time reduces the porosity of the film which minimizes penetration of the film by corrosive aqueous solutions. A preferred particle size range of the aluminum trihydrate used in this invention is about 0.25 microns to about 15 microns. A particularly preferred range is about 0.5 to about 1 micron.

While about 350 to about 1450 parts by weight, per 100 parts of film-forming binder, of zinc pigment can be used, it is preferred to use about 400 to about 1300 parts by weight of zinc pigment and even more preferred to use about 410 to about 1000 parts by weight of zinc pigment.

While one can use about 3 to about 100 parts by weight, per 100 parts of film-forming binder of aluminum trihydrate, it is preferred to use about 25 to about 90 parts by weight of aluminum trihydrate and even more preferred about 30 to about 70 parts by weight of aluminum trihydrate.

Electrical Properties

The electrical conductivities of aluminum trihydrate pigments were measured in order to determine their potential in weldable coatings. The conductance of a composite is dependent upon the electrical conductivity of the bulk material, its surface resistance and the magnitude of the organic insulating layer encapsulating the particles. Shape also is important since it determines the number of current paths.

Since the determination of electrical conductivity of a pigment in a coating is subject to the many variables mentioned above, the laboratory measurements were made on dry pigment. The test procedure was as follows. The measurement procedure involved a determination of the electrical resistivity of the test powders using a Wheatstone Bridge. The apparatus used included a General Radio 1644 A Megohm Bridge and a test cell made from a polystyrene Petri dish with cover. The top and bottom of the Petri dish are each centrally drilled for a No. 4 brass screw and washer which holds 10 mil copper discs which function as electrodes. The lower dish has an internal diameter of 8.7 cm, a depth of 1.3 cm and a volume of 77.3 cc.

The following procedure was used. The lower dish-electrode assembly was filled to over flowing with the powder to be tested. The excess powder was displaced

by placing the cover electrode dish over the lower dish. A cork cylinder was placed on top of the cover so that a 500 gram weight could be centrally located on the cell and still permit making electrical contact with leads from the test cell and the megohm bridge. Resistivity measurements were then made using a 20 volt source. The reading in megohms was then converted to ohms/cc. or ohms-cm using the procedure of ASTM D 257.

The volume resistivity of various grades of aluminum trihydrate also known as aluminum hydrate, hydrated alumina or aluminum hydroxide, $Al(OH)_3$ are presented in Table 1 and compared with zinc powder and other typical coating pigments. It may be noted that both 1/2 micron hydrated alumina (Hydral 705) and 1 micron (Hydral 710) have electrical resistivities that are lower than the Zinc Dust Pigment L-15 and therefore will not degrade the electrical conductivity and electrical welding properties of zinc-rich coatings modified with them. Alcoa Z-331 (6-7 micron hydrated alumina pigment), however, has a higher resistivity and is not as desirable. A widely used corrosion inhibitive pigment, zinc phosphate, has a resistivity that is two orders of magnitude higher than zinc. Hydral 710 with its 1 micron particle size was used in the examples because it should provide good particle packing properties with the 6-8 micron zinc dust because a particle diameter ratio of 1 to 5 is considered optimum.

TABLE 1

ELECTRICAL PROPERTIES OF PIGMENTS

| | VOLUME(1) RESISTIVITY | (2) |
|---|---|---|
| ALUMINUM TRIHYDRATE - ALCOA 705 | $5.6 \times 10^5$ | $1.9 \times 10^9$ |
| ALUMINUM TRIHYDRATE - ALCOA 710 | $1.7 \times 10^6$ | $6 \times 10^9$ |
| ZINC DUST L-15 | $5.8 \times 10^6$ | $2.0 \times 10^{10}$ |
| ALUMINUM TRIHYDRATE - ALCOA 331 | $6.1 \times 10^7$ | $2.1 \times 10^{11}$ |
| RED IRON OXIDE | $1.5 \times 10^7$ | $5.2 \times 10^{10}$ |
| MICACEOUS IRON OXIDE | $1.7 \times 10^8$ | $5.9 \times 10^{11}$ |
| ZINC PHOSPHATE | $2.1 \times 10^9$ | $7.4 \times 10^{12}$ |
| TALC | $>10^{12}$ | $>10^{15}$ |
| ATOMIZED ALUMINUM POWDER | $>10^{12}$ | $>10^{15}$ |

(1) OHMS/$CM^3$ - PETRI DISH TEST CELL AT 20 VOLTS WITH GENERAL RADIO 1644A MEGOHM BRIDGE.

(2) ASTM D-257 OHM-CM.

The invention is further described in the Examples which follow. All parts and percentages are by weight unless otherwise specified.

EXAMPLES 1-6 and CONTROLS A-C

Zinc-Rich Phenoxy Coatings

Corrosion resistance was demonstrated by using aluminum trihydrate Hydral® Alcoa 710 to modify zinc-rich phenoxy coatings at three different zinc levels. Twenty volume percent of the hydrated alumina was used to replace an equal volume of zinc or was added to the existing level of zinc in the Controls. The effect of the modification was then determined on salt spray resistance using unpassivated cold-rolled steel panels.

Table 2 summarizes the formulations and shows that the substitution or addition of hydrated alumina to the zinc-rich coating results in significant improvements in corrosion resistance.

The corrosion resistance improvement was unexpected since aluminum trihydrate is not noted as a corrosion-inhibitive pigment. The prior art contains no explanation of how the hydrated alumina interacts with the zinc to provide good corrosion resistance.

Scanning electron micrographs, however, provide some information on the physical properties of the corrosion products of the examples containing aluminum trihydrate versus the Control where zinc alone is used.

TABLE 2

COMPARISON OF PIGMENT MODIFIED ZINC RICH COATINGS (8)

SALT SPRAY RESISTANCE

| | Control A | 1 | 2 | Control B | 3 | 4 | Control C | 5 | 6 |
|---|---|---|---|---|---|---|---|---|---|
| PHENOXY PKHH (1) | 25.2 | 25.2 | 25.2 | 25.2 | 25.2 | 25.2 | 25.2 | 25.2 | 25.2 |
| PHENOLIC BKR-2620 (2) | 6.3 | 6.3 | 6.3 | 6.3 | 6.3 | 6.3 | 6.3 | 6.3 | 6.3 |
| SUSPENDING AGENT #1 (3) | 1.1 | 1.1 | 1.1 | 1.1 | 1.1 | 1.1 | 1.1 | 1.1 | 1.1 |
| SUSPENDING AGENT #2 (4) | .7 | .7 | .7 | .7 | .7 | .7 | .7 | .7 | .7 |
| ZINC PIGMENT (5) | 315 | 252 | 315 | 179 | 143 | 179 | 415 | 332 | 415 |
| ALUMINUM TRIHYDRATE (6) | - | 21.2 | 21.2 | - | 12 | 12 | - | 27.9 | 27.9 |
| VOLUME ZINC % | 61.5 | 49.2 | 54.7 | 47.6 | 38.1 | 43.9 | 67.8 | 54.2 | 59.7 |
| VOLUME ALUMINUM TRIHYDRATE % | - | 12.3 | 10.9 | - | 9.5 | 8.7 | - | 13.6 | 11.9 |
| PIGMENT VOLUME RATIO - ZINC/ATH | 100/0 | 80/20 | 100/20 | 100/0 | 80/20 | 100/20 | 100/0 | 80/20 | 100/20 |
| SALT SPRAY RATING (7) | | | | | | | | | |
| EXPOSURE 100 HRS. - BLISTERS | 8MD | 8F | 8F | 8M | 8F | 8M | 8M | 8F | - |
| CORROSION | 6 | 8 | 9 | 7 | 9 | 7 | 7 | 8 | 10 |
| 250 HRS. - BLISTERS | 8MD | 8F | 8F | 8M | 8F | 8M | 8M | 8F | 8F |
| CORROSION | 4 | 8 | 8 | 6 | 8 | 6 | 4 | 8 | 9 |
| 340 HRS. - BLISTERS | 8MD | 8F | 8F | 8M | 8F | 8M | 8M | 8F | 8F |
| CORROSION | 3 | 7 | 7 | 5 | 7 | 6 | 4 | 7 | 8 |

(1) DISSOLVED IN CELLOSOLVE ACETATE (21% SOLIDS).
(2) DISSOLVED IN CELLOSOLVE (21% SOLIDS).
(3) AEROSIL R-972 - DE GUSSA.
(4) MPA-60 NL INDUSTRIES.
(5) L-15 FEDERATED METALS CORP.
(6) HYDRAL 710 - 1 MICRON.
(7) SALT SPRAY ASTM B-117.
(8) APPLIED TO COLD ROLLED STEEL AND BAKED AT 350°F/20 MINS. 0.8 ±1 MILS (DRY). 175 °C 20 25 μm

Examination of Figure 1 shows the presence of thread-like deposits on the surface of the mixtures containing aluminum trihydrate which are absent in formulations containing only zinc. Higher magnification (1000X) in Figure 2 provides more evidence of a multitude of small thread-like structures on the zinc-alumina trihydrate coating. The new surface structure may be expected to have better barrier properties than the formulation containing zinc alone. The thread-like structure seen resembles aluminum hydroxide formed on corroding aluminum.

The welding properties of the Examples and Controls were demonstrated by evaluating spark spatter and weld strength of coated steel specimens with a Model CSS-Mark 4, Type OOAH 15 kva spot welder using a 4-cycle welding interval and a 50-cycle hold or cooling period. Water cooled electrodes were used having a 1/4" (6.35 mm) diameter with an 1/8" (3.175 mm) tip and a 45° taper.

The following conditions were used:

| | | | |
|---|---|---|---|
| Welding Time | - | 4 cycles of 60 cycle/sec (Hz) current | |
| Phase Shift Heat Control | - | 60% | |
| Hold Time | - | 50 cycles | |
| Gage Clamping Pressure | - | 75 psi | 51.75 $N/mm^2$ |
| Clamp Force | - | 100 pounds | 45 kg |
| Electrode Face Pressure | - | 8150 psi | 5623.5 $N/mm^2$ |

The data in Table 3 demonstrates that spark spatter is decreased and welding strength increased when hydrated alumina is substituted for or added to zinc-rich phenoxy coatings. The spark spatter data is the result of visual observations during welding. Weld strength was determined by placing the composites under torsion until broken by hand. These are relative values showing significant differences. The weld nugget was also examined and found to be cleaner and better shaped when the aluminum trihydrate formulations were used. A similar observation was made on the copper welding electrodes. The aluminum trihydrate formulations provided less buildup or bonding.

It may be inferred from this that the zinc oxide formed has less of a tendency to stick to the copper electrodes than due the zinc metal particles which can alloy with the copper. A scanning electron micrograph (Figure 3) shows that the spherical particles of metallic zinc tend to imbed themselves into the face of the copper electrode.

TABLE 3

COMPARISON OF PIGMENT MODIFIED ZINC RICH COATINGS (7)

SPOT WELDING PROPERTIES (METAL TO METAL)

| | Control A | 1 | 2 | Control B | 3 | 4 | Control C | 5 | 6 |
|---|---|---|---|---|---|---|---|---|---|
| PHENOXY PKHH (1) | 25.2 | 25.2 | 25.2 | 25.2 | 25.2 | 25.2 | 25.2 | 25.2 | 25.2 |
| PHENOLIC BKR-2620 (2) | 6.3 | 6.3 | 6.3 | 6.3 | 6.3 | 6.3 | 6.3 | 6.3 | 6.3 |
| SUSPENDING AGENT #1 (3) | 1.1 | 1.1 | 1.1 | 1.1 | 1.1 | 1.1 | 1.1 | 1.1 | 1.1 |
| SUSPENDING AGENT #2 (4) | .7 | .7 | .7 | .7 | .7 | .7 | .7 | .7 | .7 |
| ZINC PIGMENT (5) | 315 | 252 | 315 | 179 | 143 | 179 | 415 | 332 | 415 |
| ALUMINUM TRIHYDRATE (6) | - | 21.2 | 21.2 | - | 12 | 12 | - | 27.9 | 27.9 |
| VOLUME ZINC % | 61.5 | 49.2 | 54.7 | 47.6 | 38.1 | 43.9 | 67.8 | 54.2 | 59.7 |
| VOLUME ALUMINUM TRIHYDRATE % | - | 12.3 | 10.9 | - | 9.5 | 8.7 | - | 13.6 | 11.9 |
| PIGMENT VOLUME RATIO - ZINC/ATH | 100/0 | 80/20 | 100/20 | 100/0 | 80/20 | 100/20 | 100/0 | 80/20 | 100/20 |
| SPARK SPATTER - FEET | 4 | 0 | 0 | 3 | 1 | 1 | 2 | 1 | 1 |
| WELD STRENGTH (8) | M | G | VG | VP | M-G | VG | M-G | VG | M-G |

(1) DISSOLVED IN CELLOSOLVE ACETATE (21% SOLIDS).
(2) DISSOLVED IN CELLOSOLVE (21% SOLIDS).
(3) AEROSIL R-972 - DE GUSSA.
(4) MPA-60 NL INDUSTRIES.
(5) L-15 FEDERATED METALS CORP.
(6) HYDRAL 710 - 1 MICRON.
175 °C 18 µm
(7) APPLIED TO COLD ROLLED STEEL AND BAKED AT 350°F/20 MINS. at 0.7±1 MILS DRY.
(8) TORSION SHEAR - VP - VERY POOR
P - POOR
M - MEDIUM
G - GOOD
VG - VERY GOOD

Trade names of the pigments used are tabulated below.

| | |
|---|---|
| Aluminum Trihydrate | - Hydral 705 (1/2 micron) Alcoa |
| | - Hydral 710 (1 micron) Alcoa |
| | - C-331 (6-7 microns) Alcoa |
| Zinc Pigment | - L-15 Federated Metals Corp. |
| Zinc Phosphate | - Reichard-Coulston, Inc. |

The following code was used for exposure ratings for coatings in the above-enumerated tests:

10 - No Change
9 - Very Slight Change
8 - Slight Change
7 - Medium +
6 - Medium
5 - Medium -
4 - Slightly Bad
3 - Bad
2 - Very Bad
1 - Partial Failure
0 - Failure

Blisters - F = Few
M = Medium
D = Dense

Corrosion - T-1 = Rusting without blisters
T-2 = Rusting with blisters

Interpretation of the tests is given in ASTM D 714-56.

EXAMPLES 7-8

POLYISOCYANATE HARDENED "PHENOXY" ZINC-RICH COATINGS

Coatings were prepared from a solution of Phenoxy resin and a solution of a polyisocyanate (hexamethylene diisocyanate biuret - Mobay Desmodur N-75). A hydroxy to isocyanate stoichiometry of 1 to 0.5 was used. The hydrated alumina was dispersed using a high speed mixer (Cowles) to a Hegman Grind of 5.5 (ASTM-D 1210-79) and then the zinc pigment was added.

The coatings were applied to cold rolled steel panels with a doctor blade to a dry film thickness of 0.65 mils. The panels were then cured at 350°F (177°C) for 20 minutes and exposed to salt spray. The isocyanate cured systems all had good solvent resistance passing 50 MEK rubs.

| | Control D | 7 | 8 |
|---|---|---|---|
| Zinc/Hydrated Alumina Ratio | 100/0 | 80/20 | 100/20 |
| Part A | | | |
| Phenoxy PKHH 21% Solution in CELLOSOLVE Acetate | 117.3 | 117.3 | 117.3 |
| Silane Treated Silica[(a)] Aerosil R-972 | 1.1 | 1.1 | 1.1 |
| MPA 60 Suspension Agent | 0.7 | 0.7 | 0.7 |
| L-15 Zinc Pigment | 315.0 | 252.0 | 315.0 |
| Hydral 710 | - | 21.2 | 21.2 |
| Part B | | | |
| Desmodur N-75 | 9.15 | 9.15 | 9.15 |
| Dibutyl Tin Dilaurate (1% in CELLOSOLVE Acetate) | 0.47 | 0.47 | 0.47 |

(a) Sold by Degussa Inc., Teterboro, New Jersey.

SALT SPRAY COLD ROLLED STEEL

| | Control D | 7 | 8 |
|---|---|---|---|
| Zinc/Hydrated Alumina Ratio | 100/0 | 80/20 | 100/20 |
| **CORROSION RATING** | | | |
| 265 Hrs. | 5T-2 | 10T-2 | None-10 |

Substitution or addition of hydrated alumina to the zinc in Control D results in a substantial improvement in corrosion resistance.

EXAMPLES 9-10

POLYAMINOAMIDE CURED EPOXY ZINC-RICH COATINGS

Coatings were prepared by dispersing the hydrated alumina in a solid epoxy resin (Shell Epon 1001) solution for a grind of 6 on the Hegman gauge using a high speed mixer of the Cowles type. This was followed by the addition of the zinc pigment.

The hardener portion of the formulation was added to the mix and the coatings were applied to steel panels, oven cured at 150°C for 30 minutes. They were then exposed to salt spray. The formulations and test results are shown below.

| | Control E | 9 | 10 |
|---|---|---|---|
| Zinc/Hydrated Alumina Ratio | 100/0 | 80/20 | 100/20 |
| Part A | | | |
| Epoxy Resin EEW 450-550 (Epon 1001) | 15.75 | 15.75 | 15.75 |
| Methyl Isobutylketone | 10.5 | 10.5 | 10.5 |
| CELLOSOLVE | 10.5 | 10.5 | 10.5 |
| Xylene | 10.5 | 10.5 | 10.5 |
| MPA-60 | 4.7 | 4.7 | 4.7 |
| Hydral 710 | - | 21.2 | 21.2 |
| Zinc L-15 | 315 | 252 | 315 |

| | Control E | 9 | 10 |
|---|---|---|---|
| Zinc/Hydrated Alumina Ratio | 100/0 | 80/20 | 100/20 |
| **Part B** | | | |
| Polyaminoamide Hardener- General Mills Versamid 401 | 26.3 | 26.3 | 26.3 |
| Isopropanol | 10.0 | 10.0 | 10.0 |
| DMP-30 Catalyst tris(dimethyl amino methyl) phenol[(b)] | 0.4 | 0.4 | 0.4 |

[(b)] Sold by Rohm and Haas Co., Philadelphia, Pa.

SALT SPRAY

| | Control E | 9 | 10 |
|---|---|---|---|
| Zinc/Hydrated Alumina Ratio | 100/0 | 80/20 | 100/0 |

CORROSION RATING

| Salt Spray Exposure | Cold Rolled Steel 0.65 Dry Film (16.5 /um) | | |
|---|---|---|---|
| 100 Hrs. | 4T-2 | 7T-2 | 6T-2 |
| 265 Hrs. | 3T-2 | 4T-2 | 5T-2 |
| | Bonderite 40 Steel Panel 19 /um 0.75 Dry Film Thickness | | |
| 1010 Hrs. | 5T-2 | 6T-2 | 7T-2 |

Substitution or addition of hydrated alumina to the zinc-rich coating, Control E, results in a significant improvement in corrosion on both cold rolled steel and Bondrite 40 panels.

EXAMPLES 11-12

PHENOLIC HARDENED EPOXY ZINC-RICH COATINGS

Coatings were prepared based on high molecular

weight bisphenol A based epoxy resins (Epon 1007 having an epoxy equivalent weight of 2000-2500) hardened with a phenolic novolac having an average 5-6 repeating phenolic hydroxyl units using a curing catalyst 2-methyl imidazole as taught in U.S. 3,493,630. The resins were dissolved in the solvents shown in the formulations below. Hydrated alumina average particle size 1 micron Alcoa Hydral 710, was dispersed into the resin solution mixture with a high speed mixer (Cowles Dissolver) to a Hegman grind of 5 1/2 prior to the addition of the zinc pigment.

| | Control F | 11 | 12 |
|---|---|---|---|
| Zinc/Hydrated Alumina Ratio | 100/0 | 80/20 | 100/20 |
| Solid Epoxy Resin EEW 2000-2500 (Shell Epon 1007) Dissolved in CELLOSOLVE Acetate 35% Solids | 87.3 | 87.3 | 87.3 |
| Phenolic Novolac Union Carbide BRR-5833 Dissolved in butyl CELLOSOLVE 33 1/3% Solids | 2.8 | 2.8 | 2.8 |
| MPA-60 Suspension Agent | 0.7 | 0.7 | 0.7 |
| Silane Treated Silica Suspension Agent Aerosil R-972 | 1.1 | 1.1 | 1.1 |
| Hydrated Alumina (Hydral 710) | - | 21.2 | 21.2 |
| Zinc Pigment L-15 | 315.0 | 252.0 | 315.0 |
| 2-Methyl Imidazole - 10% in Butyl CELLOSOLVE | 3.2 | 3.2 | 3.2 |
| CELLOSOLVE Acetate | 50.0 | 50.0 | 50.0 |

Coatings were applied to cold rolled steel panels with a doctor blade to give a dry film thickness of 0.5 mils (12.7 µm). They were oven cured at 350°F (177°C) for 25 minutes. They were scribed and exposed to salt spray for 100 hours.

Corrosion rating was as follows:

| | Control F | 11 | 12 |
|---|---|---|---|
| Zinc/Hydrated Alumina Ratio | 100/0 | 80/20 | 100/20 |
| Salt Spray 100 Hrs. | | | |
| Corrosion Rating | 3T/2 | 8T/2 | None - 10 |

Coatings were applied to zinc phosphated steel (Bonderite 40) with a doctor blade to give a dry film thickness of 0.6 mils (15.2 µm). They were oven cured at 350°F (177°C) for 25 minutes. They were scribed and exposed to salt spray for 750 hours.

Corrosion rating was as follows:

| | Control F | 11 | 12 |
|---|---|---|---|
| Zinc/Hydrated Alumina Ratio | 100/0 | 80/20 | 100/20 |
| Corrosion Rating | 6T-2 | 9T-2 | 9T-2 |

Substitution of part of the zinc with hydrated alumina results in significant improvement in corrosion resistance on both cold rolled steel and zinc phosphated steel.

## EXAMPLES 13-14

### Zinc-Rich Coatings with Epoxy Ester Film-Forming Binders

A zinc-rich coating was prepared according to the formulation shown below according to the procedure of Example 7. Panels were air dried 30 minutes and then baked at 275°F (135 °C) for 45 minutes.

| Formulation | Control G | 13 | 14 |
|---|---|---|---|
| Zinc/Hydrated Alumina Ratio | 100/0 | 80/20 | 100/20 |
| Tall Oil Fatty Acid Based Epoxy Ester (RCI 38-407)[(c)] | 61 | 61 | 61 |
| MPA-60 | 3.1 | 3.1 | 3.1 |
| Xylene | 24.2 | 24.2 | 24.2 |
| Aerosil R972 | 3.1 | 3.1 | 3.1 |
| Calcium Oxide | 1.5 | 1.5 | 1.5 |
| Hydral 710 | - | 20.7 | 20.7 |
| Zinc L-15 | 308 | 264 | 308 |
| 6% Cobalt Naphthenate | 0.98 | 0.98 | 0.98 |
| 6% Manganese Naphthenate | 0.84 | 0.84 | 0.84 |
| M-E-Ketoxime[(d)] | 0.63 | 0.63 | 0.63 |
| Xylene | 21 | 21 | 21 |

---

[(c)] Reichold Chemicals Inc., White Plains, New York

[(d)] Methyl ethyl ketoxime - Tenneco Chemicals Inc., Piscataway, New Jersey

ZINC-RICH COATINGS WITH EPOXY ESTER FILM-FORMING BINDERS

| | Control G | 13 | 14 |
|---|---|---|---|
| Zinc/Hydrated Alumina Ratio | 100/0 | 80/20 | 100/20 |
| Film Thickness (C. R. Steel) mils | 0.81 | 0.80 | 0.81 |
| | 20.6 /um | 20.3 /um | 20.6 /um |
| Salt Spray Results | | | |
| Corrosion | | | |
| 100 hrs. | 7T2 | 7T2 | 9T2 |
| 200 | 6T2 | 7T2 | 8T2 |
| 310 | 5T2 | 6T2 | 8T2 |
| 430 | 5T2 | 6T2 | 7T2 |
| 510 | 5T2 | 6T2 | 7T2 |
| Blistering | | | |
| 100 hrs. | 6-8M | 8M | 8F |
| 200 | 6-8M | 6-8M | 8F |
| 310 | 6-8M | 6-8M | 8F |
| 430 | 6-8M | 6-8M | 6-8F+ |
| 510 | 6-8MD | 6-8M | 6-8F+ |

Substitution or addition of hydrated alumina to the zinc-rich coating, Control G, results in improved corrosion resistance.

EXAMPLE 15

Zinc-Rich Coatings with VAGH Vinyl Resin Binders

Zinc-rich coatings were prepared according to the formulations shown below. Pigments and additives were dispersed in the resin varnish with the aid of a Cowles type high speed mixer. Typically, a grind value of 5.5 was obtained on the Hegman gauge.

Coatings were applied to cold rolled steel with a doctor blade for a wet film thickness of 2 mils (51 /um) and a dry film thickness of 0.5-0.8 mil (12.7 20.3 /um). The coatings were

dried in air and then baked at 80°C for 10 minutes

Formulation

| | Control H | 15 |
|---|---|---|
| Zinc/Hydrated Alumina Ratio | 100/0 | 80/20 |
| Bakelite(e) VAGH (30% in MEK) | 122.5 | 122.5 |
| Aerosil R972 | 1.1 | 1.1 |
| MPA 60 | 0.7 | 0.7 |
| Hydral 710 | - | 21.2 |
| Zinc L-15 | 315 | 252 |

(e) Trademark of Union Carbide Corporation for a vinyl chloride-vinyl acetate-vinyl alcohol copolymer containing 91% vinyl chloride, 3% vinyl acetate and 6% vinyl alcohol by weight copolymerized therein.

BAKELITE VAGH VINYL RESIN FILM-FORMING BINDER

| | Control H | 15 |
|---|---|---|
| Zinc/Hydrated Alumina Ratio | 100/0 | 80/20 |
| Film Thickness (on cold rolled steel), mils | 0.85<br>21.6 /um | 0.84<br>21.3 /um |
| Salt Spray Results | | |
| Corrosion | | |
| 100 Hrs. | None | None |
| 260 Hrs. | | |
| 400 Hrs. | 8T2 | 8T2 |
| 500 Hrs. | 8T2 | 8T2 |
| Blistering | | |
| 100 Hrs. | 8D | 8D |
| 260 Hrs. | 4-6D | 6-8D |
| 400 Hrs. | 4D | 6-8D |
| 500 Hrs. | 4D | 6-8D |

Substitution of hydrated alumina for part of the zinc in Control H results in improved blister resistance.

EXAMPLE 16

Zinc-Rich Coating with Bakelite VYHH Vinyl Film-Forming Binder

This coating formulation, as shown below, was prepared in the manner described in Example 7.

Formulation

| Zinc/Hydrated Alumina Ratio | Control I 100/0 | 16 80/20 |
|---|---|---|
| Bakelite[f] VYHH (30% in MEK) | 120 | 120 |
| Aerosil R972 | 1.1 | 1.1 |
| MPA 60 | 0.7 | 0.7 |
| Hydral 710 | - | 21.2 |
| Zinc L-15 | 315 | 252 |

(f) Trademark of Union Carbide Corporation for a vinyl chloride-vinyl acetate copolymer containing 87% vinyl chloride and 13% vinyl acetate by weight copolymerized therein.

BAKELITE VYHH VINYL RESIN FILM-FORMING BINDER

| Zinc/Hydrated Alumina Ratio | Control I 100/0 | 16 80/20 |
|---|---|---|
| Film Thickness (on cold rolled steel), mils | 0.85 | 0.83 |
| | 21.6 µm | 21.1 µm |
| Salt Spray Results | | |
| Corrosion | | |
| 100 Hrs. | None | None |
| 260 Hrs. | 8-T2 | 8-T2 |
| 400 Hrs. | 7-T2 | 8-T2 |
| 500 Hrs. | 6-T2 | 7-T2 |

BAKELITE VYHH VINYL RESIN FILM-FORMING BINDER (continued)

Salt Spray Results (continued)

| | | |
|---|---|---|
| Blistering | | |
| 100 Hrs. | 6-8D | 6-8D |
| 260 Hrs. | 6-8D | 6-8D |
| 400 Hrs. | 4-8D | 6-8D |
| 500 Hrs. | 4-6D | 6-D. |

Substitution of hydrated alumina for part of the zinc in Control coating I results in improved corrosion and blister resistance.

## EXAMPLE 17

### Zinc-Rich Coating with Chlorinated Rubber Film-Forming Binder

This formulation, shown below, was prepared as described in Example 7.

Formulation

| | Control J | 17 |
|---|---|---|
| Zinc/Hydrated Alumina Ratio | 100/0 | 80/20 |
| Parlon[(g)] S-10 (30% in MEK) | 143.6 | 143.6 |
| Aerosil R972 | 1.1 | 1.1 |
| MPA 60 | 0.7 | 0.7 |
| Hydral 710 | - | 21.2 |
| Zinc L-15 | 315 | 252 |

[(g)] Trademark of Hercules Inc., Wilmington, Delaware for a chlorinated rubber.

PARLON S-10 RESIN FILM-FORMING BINDER

| Zinc/Hydrated Alumina Ratio | Control J 100/0 | 17 80/20 |
|---|---|---|
| Film Thickness (on cold rolled steel), mils | 0.73 | 0.76 |
| | 18.5 /um | 19.3 /um |
| Salt Spray Results | | |
| Corrosion | | |
| 100 Hrs. | None | 5-T2 |
| 260 Hrs. | 7-T2 | 4-T2 |
| 400 Hrs. | 4-T2 | 4-T2 |
| 500 Hrs. | 4-T2 | 4-T2 |
| Blistering | | |
| 100 Hrs. | 4-6D | 6-8D |
| 260 Hrs. | 4-6D | 6-8D |
| 400 Hrs. | 4-6D | 6-8D |
| 500 Hrs. | 4-6D | 6-8D |

Substitution of hydrated alumina for part of the zinc in Control J coating results in improved blister resistance.

## EXAMPLE 18

### Zinc-Rich Coating with Poly(bisphenol A formal) Film-Forming Binder

This formulation, shown below, was prepared as described in Example 7.

Formulation

| Zinc/Hydrated Alumina Ratio | Control K 100/0 | 18 80/20 |
|---|---|---|
| Poly(bisphenol A formal) (19% in chloroform) | 168 | 168 |
| Aerosil R972 | 1.1 | 1.1 |
| MPA 60 | 0.7 | 0.7 |
| Hydral 710 | - | - |
| Zinc L-15 | 315 | 252 |

POLY(BISPHENOL A FORMAL) FILM-FORMING BINDER

| Zinc/Hydrated Alumina Ratio | Control K 100/0 | 18 80/20 |
|---|---|---|
| Film Thickness (on cold rolled steel), mil | | |
| Salt Spray Results | | |
| Corrosion | | |
| 100 Hrs. | 8-T2 | None |
| 240 Hrs. | 6-T2 | 7-T2 |
| 310 Hrs. | 4-T2 | 5-T2 |
| Blistering | | |
| 100 Hrs. | 6-8D | 8D |
| 240 Hrs. | 6-8D | 8D |
| 310 Hrs. | 6-8D | 8D |

Substitution of hydrated alumina for part of the zinc in Control K results in improved corrosion and blister resistance.

## EXAMPLE 19

### Zinc-Rich Coating High Molecular Weight Epoxide Film-Forming Binder

This coating formulation, as shown below, was prepared in the manner described in Example 7, except that the baking conditions were 20 minutes at 177°C.

Formulation

| Zinc/Hydrated Alumina Ratio | Control L 100/0 | 19 80/20 |
|---|---|---|
| Eponol 55BK30 (30% in MEK/Oxitol[(h)]) | 84 | 84 |
| Aerosil R972 | 1.1 | 1.1 |
| MPA 60 | 0.7 | 0.7 |
| Hydral 710 | - | 21.2 |
| Zinc L-15 | 315 | 252 |

[(h)] Oxitol is a Trademark of Shell Chemical Co. for ethylene gylcol monoethyl ether.

EPONOL 55BK30 FILM-FORMING BINDER

| | Control L | 19 |
|---|---|---|
| Zinc/Hydrated Alumina Ratio | 100/0 | 80/20 |
| Film Thickness (on cold rolled steel), mil | 0.53<br>13.5 µm | 0.54<br>13.7 µm |
| Salt Spray Results | | |
| Corrosion | | |
| 100 Hrs. | 7-T2 | None |
| 240 Hrs. | 5-T2 | 8-T2 |
| 300 Hrs. | 4-T2 | 7-T2 |
| 400 Hrs. | 4-T2 | 6-T2 |
| 500 Hrs. | 4-T2 | 6-T2 |
| Blistering | | |
| 100 Hrs. | 8D | 8M |
| 240 Hrs. | 8D | 6-8M |
| 300 Hrs. | 6-8D | 6-8D |
| 400 Hrs. | 6-8D | 6-8D |
| 500 Hrs. | 6-8D | 6D |

Substitution of hydrated alumina for part of the zinc in Control L results in improved corrosion resistance.

EXAMPLE 20

Zinc-Rich Coating with Alkyl Silicate Film-Forming Binder

The recipes below were added together in the order below to one quart cans and stirred at high speed with a dispersator (Cowles mixer) for one minute. Sand blasted steel panels were spray painted with each sample to a thickness of 3-4 mils (76-102 µm). These panels were cured at ambient temperatures and pressure for one week before submitting them for salt spray.

ZINC-RICH COATING WITH ALKYL SILICATE FILM-FORMING BINDER

| System | Control M | 20 |
|---|---|---|
| Zinc/ATH Ratio | 100/0 | 80/20 |
| "Ethocel Medium Premium 100"/xylene (thickener) | 61.8g | 61.8g |
| Mica 325 | 14.7g | 14.7g |
| Molecular Sieves (3-A) | 1.5g | 1.5g |
| MPA-1078X | 4.8g | 4.8g |
| UCAR Silicate (ESP Y2) | 38.7g | 38.7g |
| Zinc Dust (L-15) | 178.5g | 164.6g |
| Aluminum Trihydrate (Hydral 710) | -- | 13.9g |

| System | Control M | 19 |
|---|---|---|
| Zinc/ATH Ratio | 100/0 | 80/20 |
| Dry Film Thickness (mils) (Sand Blasted Steel) | 4.1 | 4.1 |
| | 104 /um | 104 /um |
| **Salt Spray Results** | | |
| Corrosion | | |
| 4000 hrs. | 8T-2 | 9T-1 |
| Blistering | | |
| 4000 hrs. | 8F | None |

Substitution of hydrated alumina for part of the zinc in Control M results in improved corrosion and blister resistance.

If desired additives such as water scavengers, exemplified by calcium oxide, molecular sieves and the like, can be incorporated into the compositions of this invention to prevent hydrogen formation in storage.

Although the invention has been described with a certain degree of particularity, it will be understood by those skilled in the art that the present disclosure of the preferred forms has been made only by way of example and that numerous changes and modifications can be made without departing from the spirit and the scope of the invention.

PATENTANWÄLTE
WUESTHOFF - v. PECHMANN - BEHRENS - GOETZ
EUROPEAN PATENT ATTORNEYS

DR.-ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING.; DIPL.-WIRTSCH.-ING. RUPERT GOET

D-8000 MÜNCHEN 90
SCHWEIGERSTRASSE 2
TELEFON: (089) 66 20 51
TELEGRAMM: PROTECTPATENT
TELEX: 524 070

0070008



What is claimed is:

1. A coating composition comprising:

(A) a film-forming binder;
(B) about 350 to about 1450 parts by weight, per 100 parts of said film-forming binder, of zinc-pigment;
(C) about 3 to about 100 parts by weight, per 100 parts of said film-forming binder, of aluminum trihydrate;
(D) 0 to about 35 parts by weight, per 100 parts of said film-forming binder, of a heat hardened resole phenol-aldehyde condensation resin; and
(E) 0 to about 20 parts by weight, per 100 parts of said film-forming binder, of a suspending agent.

2. Composition claimed in claim 1 containing about 25 to about 90 parts by weight preferably about 30 to about 70 parts by weight of aluminum trihydrate.

3. Composition claimed in claim 1 or 2 wherein the aluminum trihydrate has a particle size of about 0.25 to about 15 microns.

4. Composition claimed in claim 1 to 3 containing about 20 to about 30 parts by weight of resole phenol-aldehyde condensation resin.

5. Composition claimed in claim 1 to 4 containing about 4 to about 10 parts by weight of a suspending agent.

6. Composition claimed in claim 1 to 5 wherein the film-forming binder is a thermoplastic polyhydroxyether reaction product of substantially equimolar amounts of a polynuclear dihydric phenol and epichlorohydrin, said thermoplastic polyhydroxyether having a degree of polymerization of at least about 80.

7. Composition claimed in claim 6 wherein the polynuclear dihydric phenol is 2,2-bis(4-hydroxyphenyl)propane preferably dissolved in a glycol ester, preferably the glycol ester is Cellosolve acetate.

8. Composition claimed in claim 7 dissolved in a mixture of Cellosolve acetate and an aromatic hydrocarbon containing about 7 to about 8 carbons or in a mixture of an aliphatic ketone containing about 3 to 6 carbons and an aromatic hydrocarbon containing about 7 to 9 carbons or in a mixture of an aliphatic ketone containing 3 to about 6 carbons, an aromatic hydrocarbon containing 7 to 9 carbons and an aliphatic alcohol containing 3 to about 5 carbons.

9. Composition claimed in claim 1 to 5 wherein the film-forming binder is a polyisocyanate cured thermoplastic polyhydroxyether.

10. Composition claimed in claim 1 to 5 wherein the film-forming binder is a cured high molecular weight epoxy resin having an initial epoxy equivalent weight of at least about 450.

11. Composition claimed in claim 10 wherein the epoxy resin is cured with a polyaminoamide or with a phenolic novolak resin.

12. Composition claimed in claim 1 to 5 wherein the film-forming binder is a thermoplastic high molecular weight epoxy resin or an epoxy ester resin or an alkyl silicate or a chlorinated rubber or a vinyl chloride copolymer resin especially a vinyl chloridevinyl acetate copolymer particulary a vinyl chloridevinyl acetate-vinyl alcohol terpolymer or a poly(bisphenol A formal).

13. Corrosion resistant article comprising a metallic substrate and adhering thereto as a coating the composition as claimed in claims 1 to 12.

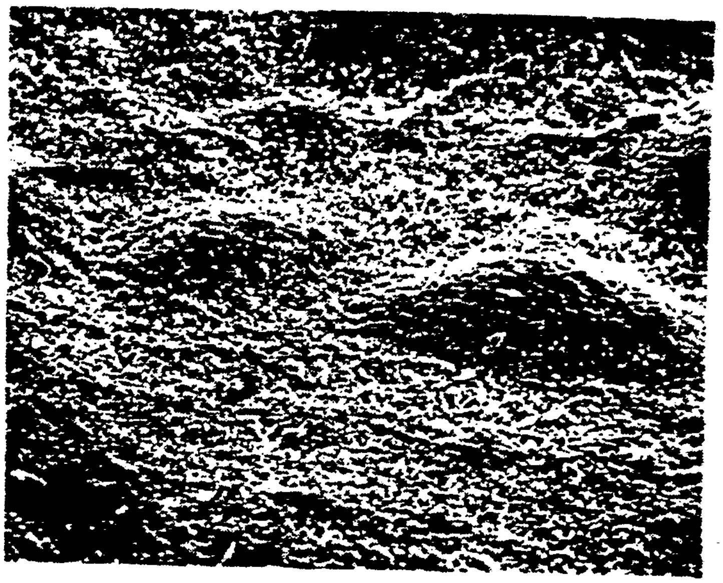

FIG. 1A

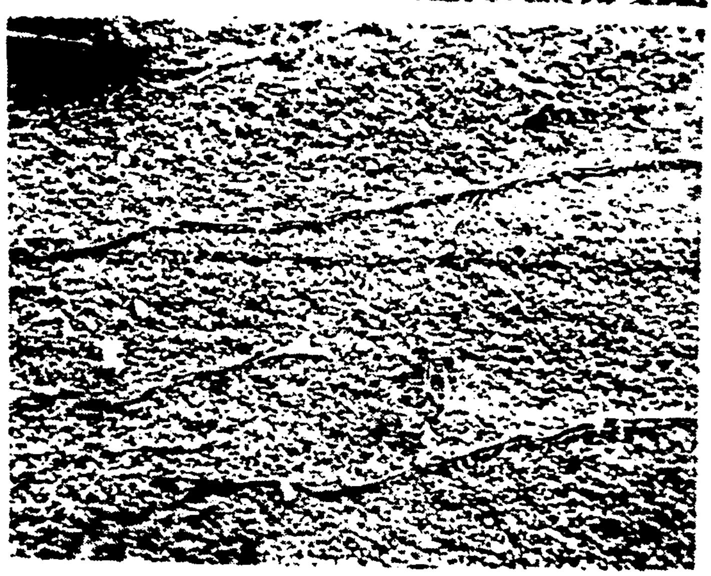

FIG. 1B

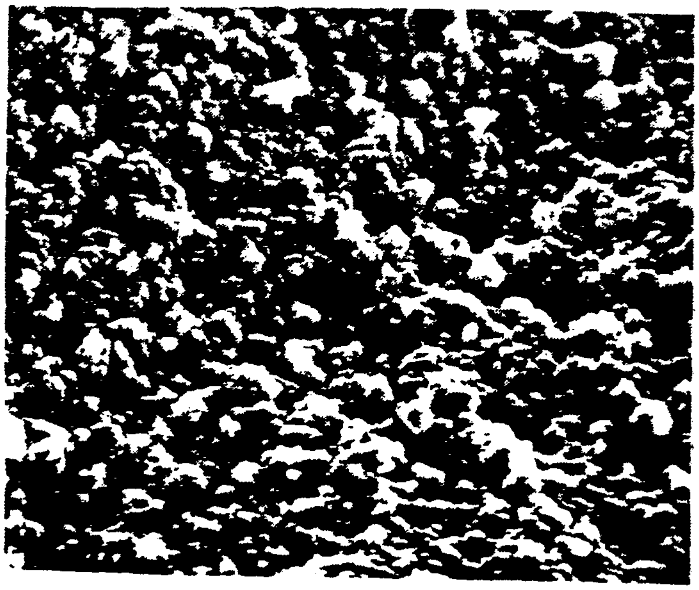

FIG. 2A

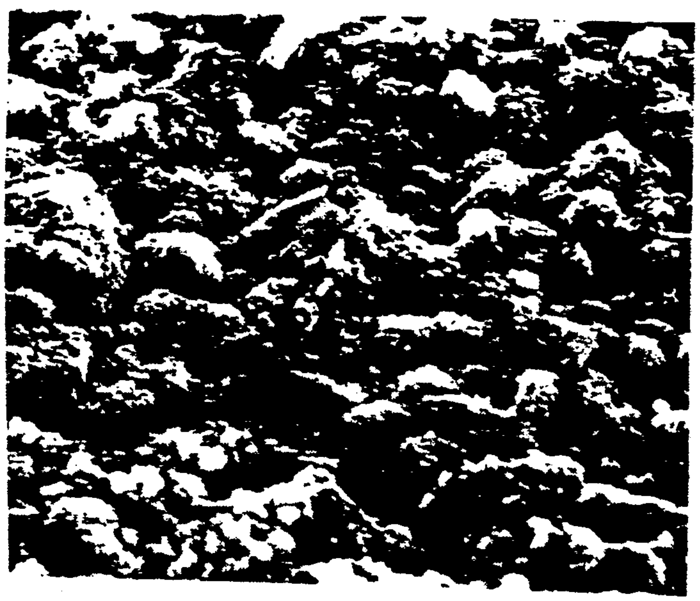

FIG. 2B

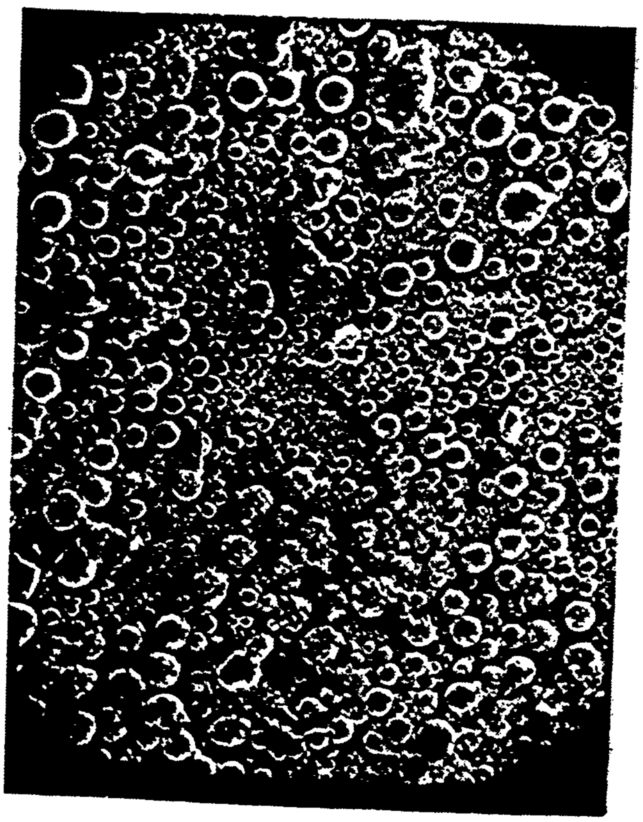

FIG. 3